# EUROPEAN PATENT APPLICATION

(11) **EP 4 329 391 A1**
(43) Date of publication of application: **28.02.2024**
(21) Application number: 22823859.8
(22) Date of filing: 31.03.2022
(51) Int. Cl.: H04W 60/00, H04W 74/00

(54) **WIFI ACCESS METHOD, TERMINAL DEVICE, AND STORAGE MEDIUM**

(30) Priority: 16.06.2021 CN 202110668251
(71) Applicant: ZTE Corporation, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Savi, Massimiliano
(86) International application number: PCT/CN2022/084667
(87) International publication number: WO 2022/262369

(57) **Abstract**

A WiFi access method, a terminal device, and a storage medium. The WiFi access method comprises: in a state of access to a mobile network, if a WiFi measurement control instruction issued by a network side by means of the mobile network is received, obtaining description information of trusted WiFi carried in the WiFi measurement control instruction (101); performing network quality detection on channels corresponding to the trusted WiFi according to the description information of the trusted WiFi to obtain indicator values for evaluating the network quality of the channels (102); and determining accessible target WiFi according to the trusted WiFi and the indicator values corresponding to the trusted WiFi, and accessing the target WiFi (103).

## Description

### CROSS-REFERENCE TO RELATED APPLICATION

This application is filed on the basis of Chinese patent application No. 202110668251.7 filed June 16, 2021, and claims priority to the Chinese patent application, the entire contents of which are incorporated herein by reference.

### TECHNICAL FIELD

Embodiments of the present disclosure relate to the field of mobile communications, and in particular, to a Wireless Fidelity (Wi-Fi) access method, a terminal device, and a storage medium.

### BACKGROUND

Nowadays, the construction of wireless cities and smart cities involves the deployment of a large number of public Wi-Fi access points to enable terminal devices to access the Internet more conveniently through Wi-Fi. However, at present, there are no security assurance technology and system to ensure whether an accessible Wi-Fi network is trusted and secure.

To ensure that a terminal device can access a trusted and secure Wi-Fi network as much as possible, an existing Wi-Fi access method is as follows: the terminal device scans available Wi-Fi access points nearby to obtain Service Set Identifiers (SSIDs), Basic Service Set Identifiers (BSSIDs), signal strength, encryption/authentication mode, and the like of a plurality of Wi-Fi access points, and then connects to a target Wi-Fi access point according to the corresponding encryption/authentication mode and depending on whether the terminal device has saved configuration information of the Wi-Fi access points. Although this method can ensure to a certain extent that a Wi-Fi network accessed by a user is trusted and secure, criminals may take advantage of the vulnerability of the technology that allows the terminal device to acquire an available Wi-Fi access point by scanning, and set up free fake Wi-Fi access points with names similar to those of nearby stores in public places and other crowded places to trick users into connecting their terminal devices to these fake Wi-Fi networks.

Most users lack security awareness when using Wi-Fi for network access, and can hardly distinguish the authenticity of these available Wi-Fi access points. As a result, once a user connects his/her terminal device to an illegitimate Wi-Fi network, the user's personal privacy will be directly exposed to criminals, and the user's information is at a risk of being stolen.

In addition, even if the available Wi-Fi access points pushed to the user based on the above method are trusted and secure, network quality of the Wi-Fi access point selected by the user cannot be ensured.

### SUMMARY

In view of the above, an objective of embodiments of the present disclosure is to provide a Wi-Fi access method, a terminal device, and a storage medium.

An embodiment of the present disclosure provides a Wi-Fi access method, applied to a terminal device. The Wi-Fi access method includes: in a state of accessing a mobile network, acquiring, in response to receiving a Wi-Fi measurement control instruction delivered by a network side through the mobile network, description information of a trusted Wi-Fi access point carried in the Wi-Fi measurement control instruction; performing network quality detection on a channel corresponding to the trusted Wi-Fi access point according to the description information of the trusted Wi-Fi access point to obtain an indicator value for evaluating network quality of the channel; and determining an accessible target Wi-Fi access point according to the trusted Wi-Fi access point and the indicator value corresponding to the trusted Wi-Fi access point, and accessing the target Wi-Fi access point.

An embodiment of the present disclosure provides a terminal device, including: at least one processor; and
a memory communicably connected to the at least one processor, where the memory stores an instruction executable by the at least one processor which, when executed by the at least one processor, causes the at least one processor to implement the above Wi-Fi access method.

An embodiment of the present disclosure provides a computer-readable storage medium, storing a computer program which, when executed by a processor, causes the processor to implement the above Wi-Fi access method.

### BRIEF DESCRIPTION OF DRAWINGS

One or more embodiments are illustrated by corresponding diagrams in the accompany drawings and these exemplary illustrations are not intended to constitute a limitation to the embodiments.
FIG. 1 is a schematic flowchart of a Wi-Fi access method according to an embodiment of the present disclosure;
FIG. 2 is a schematic flowchart of determining a target Wi-Fi access point mentioned in step 103 in the Wi-Fi access method shown in FIG. 1 by a terminal device;
FIG. 3 is a schematic flowchart of determining a target Wi-Fi access point mentioned in step 103 in the Wi-Fi access method shown in FIG. 1 by a network side;
FIG. 4 is a schematic flowchart of a Wi-Fi access method according to another embodiment of the present disclosure; and
FIG. 5 is a schematic structural diagram of a terminal device according to an embodiment of the present disclosure.

### DETAILED DESCRIPTION

The term "and/or" in the embodiments of the present disclosure is used for describing an association between associated objects and representing that three associations may exist. For example, "A and/or B" may indicate that only A exists, only B exists, and both A and B exist. The character "j" generally indicates an "or" relation between the associated objects.

The term "multiple" or "plurality of" in the embodiments of the present disclosure refers to two or more, and other quantifiers are to be construed in a similar way.

Objectives, technical schemes and advantages of the embodiments of the present disclosure will be clearer from a detailed description of the embodiments of the present disclosure in conjunction with the drawings. However, it may be understood by those having ordinary skills in the art that although various embodiments of the present disclosure provide many technical details to make readers better understand the present disclosure, the technical schemes claimed in the present disclosure can be realized even without these technical details and various variations and modifications made based on the following embodiments. The following embodiments are divided for convenience of description and are not intended to constitute any limitation to the specific implementations of the present disclosure. The embodiments may be combined or used as references for each other if not in collision.

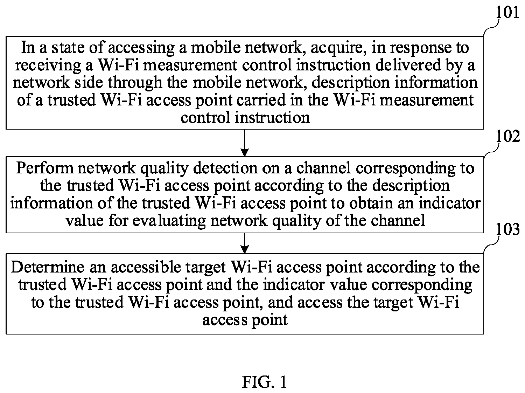

FIG. 1 is a schematic flowchart of a Wi-Fi access method according to an embodiment of the present disclosure. In this embodiment, the method is mainly applied to a terminal device having a capability of accessing a mobile network and a Wi-Fi network, such as a smart phone equipped with a Subscriber Identity Module (SIM) card.

For the convenience of description, this embodiment is described using an example where the terminal device is a smart phone equipped with a SIM card. The Wi-Fi access method provided in this embodiment is described with reference to FIG. 1.

As shown in FIG. 1, the Wi-Fi access method provided in this embodiment includes the following steps.

At a step 101, in a state of accessing a mobile network, when receiving a Wi-Fi measurement control instruction delivered by a network side through the mobile network, description information of a trusted Wi-Fi access point carried in the Wi-Fi measurement control instruction is acquired.

It can be understood that, to ensure that the terminal device is in the state of accessing the mobile network, an operation of connecting the terminal device to the mobile network needs to be performed before the Wi-Fi access method provided in this embodiment is executed. After the terminal device is started, it is required to identify whether an available SIM card is installed in the terminal device. If yes, the SIM card needs to be registered with the mobile network to ensure that the terminal device can communicate with the network side through the mobile network.

In addition, it should be noted that as described in the Access Traffic Steering, Switching, and Splitting (ATSSS) technology introduced in the 3rd Generation Partnership Project (3GPP) Release 16 (R16), the use of ATSSS in a terminal device enables the terminal device to support path optimization (selection of an optimal network), seamless switching, and multi-channel concurrent transmission functions of multi-access services. Therefore, to ensure that the terminal device can implement automatic switching between different types of networks, such as a 5G mobile network and a Wi-Fi network, both the terminal device and the network side in this embodiment need to support the ATSSS function.

For a manner of determining whether the network side supports the ATSSS function, in an example, when the terminal device registers the SIM card with the mobile network, the terminal device determines whether the network side supports the ATSSS function according to a field value corresponding to an ats_ind field in a Registration Accept message delivered by the network side through the mobile network.

When whether the network side supports the ATSSS function is determined based on this manner, the following steps are executed.

First, the terminal device acquires a Registration Accept message delivered by the network side through the mobile network. Then, the Registration Accept message is parsed to extract an ats_ind field in the Registration Accept message. Finally, it is determined according to a field value corresponding to the ats_ind field whether the network side supports the ATSSS function.

In an example, determining according to the field value corresponding to the ats_ind field whether the network side supports the ATSSS function may be: determining whether the field value corresponding to the ats_ind field matches a preset threshold through comparison, and if the field value corresponding to the ats_ind field matches the preset threshold, determining that the network side supports the ATSSS function.

For example, the preset threshold is determined to be 1 in advance. When ats_ind=1, it is determined that the network side supports the ATSSS function; otherwise, it is determined that the network side does not support the ATSSS function.

To better understand the determining of whether the network side supports the ATSSS function based on the Registration Accept message, some contents of the Registration Accept message are given below:

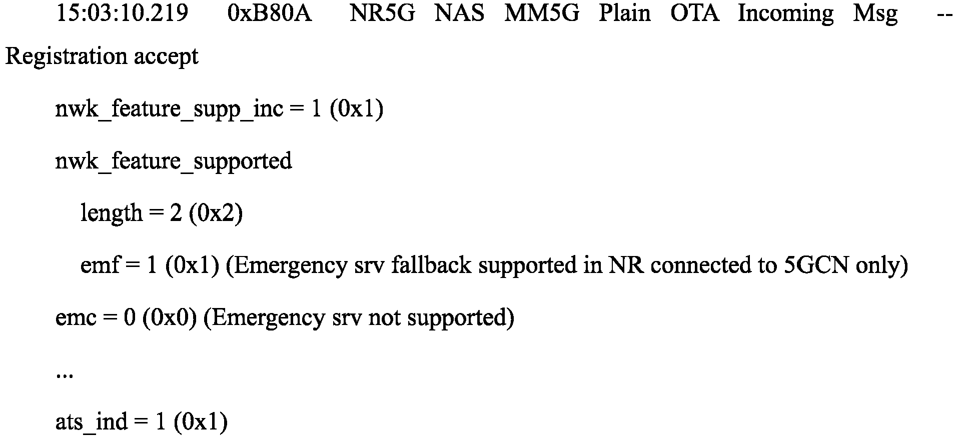

In this way, the operation of determining whether the network side supports the ATSSS function is implemented.

In addition, it should be noted that generally, when initiating a Multi-Access (MA)

Protocol Data Unit (PDU) session request to the network side, the terminal device uses an atsss_st field of the MA PDU session request to inform the network side whether the terminal device supports the ATSSS function. Therefore, when initiating the MA PDU session request to the network side, the terminal device needs to detect whether the terminal device supports the ATSSS function.

A manner of using the MA PDU session request to determine whether the terminal device supports the ATSSS function is as follows: the terminal device first acquires an MA PDU session request initiated to the network side; then parses the MA PDU session request to extract an atsss_st field in the MA PDU session request; and finally determines according to a field value corresponding to the atsss_st field whether the terminal device supports the ATSSS function.

In an example, determining according to the field value corresponding to the atsss_st field whether the terminal device supports the ATSSS function may be: determining whether the field value corresponding to the atsss_st field matches a preset threshold through comparison, and if the field value corresponding to the atsss_st field matches the preset threshold, determining that the terminal device supports the ATSSS function.

For example, the preset threshold is determined to be 1 in advance. When atsss_st=1, it is determined that the terminal device supports the ATSSS function; otherwise, it is determined that the terminal device does not support the ATSSS function.

To better understand the determining of whether the terminal device supports the ATSSS function based on the MA PDU session request, some contents of the MA PDU session request are given below:

```
     15:03:11.643 0xB801 NR5G NAS SM5G Plain OTA Outgoing Msg -- PDU
 session establishment req
     nr5g_smm_msg
     pdu_session_estab_req
          _5gsm_cap
     atsss_st = 1 (0x1)
```

In this way, the operation of determining whether the terminal device supports the ATSSS function is implemented.

In addition, when it is ensured that both the network side and the terminal device support the ATSSS function, it is also necessary to determine that the terminal device supports a Wi-Fi function, in order to ensure that the terminal device can cooperate with the network side to implement the Wi-Fi access method provided in this embodiment.

As for determining whether the terminal device supports the Wi-Fi function, in an example, the terminal device may identify, when registering the SIM card with the mobile network, that the terminal device supports the Wi-Fi function, and inform the network side that the terminal device supports the Wi-Fi function. In another example, the terminal device may identify the Wi-Fi function of the terminal device while determining whether the terminal device supports the ATSSS function, and when the terminal device supports the ATSSS function, report that the terminal device supports Wi-Fi function while reporting to the network side that the terminal device supports the ATSSS function.

The Wi-Fi function described above includes, but not limited to, a protocol version, a frequency band, bandwidth, whether dual Wi-Fi is supported, etc.

In addition, in an example, the network side mentioned above may be a base station, a server, a related network element device, etc., which will not be enumerated herein, and is not limited in this embodiment.

At a step 102, network quality detection is performed on a channel corresponding to the trusted Wi-Fi access point according to the description information of the trusted Wi-Fi access point to obtain an indicator value for evaluating network quality of the channel.

In this embodiment, the description information of the trusted Wi-Fi access point in the Wi-Fi measurement control instruction delivered by the network side through the mobile network includes, but not limited to, an SSID, a BSSID, a frequency band, a channel number, a measurement parameter, a measurement time interval, a reported event threshold, a Wi-Fi access threshold, a trusted Wi-Fi identifier, etc.

Correspondingly, in an example, performing network quality detection on the channel corresponding to the trusted Wi-Fi access point according to the description information of the trusted Wi-Fi access point include: switching to a channel corresponding to a trusted Wi-Fi access point according to a channel number in description information of the trusted Wi-Fi access point, and then measuring the channel according to the measurement time interval and the measurement parameter, to obtain an indicator value for evaluating network quality of the channel.

It should be noted that the indicator value mentioned in this embodiment includes, but not limited to, a signal strength indicator value and a link quality indicator value.

At a step 103, an accessible target Wi-Fi access point is determined according to the trusted Wi-Fi access point and the indicator value corresponding to the trusted Wi-Fi access point, and the target Wi-Fi access point is accessed.

If there are a plurality of trusted Wi-Fi access points delivered by the network side, an indicator value corresponding to each trusted Wi-Fi access point is obtained based on the above manner, network quality of each trusted Wi-Fi access point can be determined according to the indicator value for evaluating network quality of a channel corresponding to each trusted Wi-Fi access point, and one of the trusted Wi-Fi access points may be selected as an accessible target Wi-Fi access point according to a preset service requirement.

In an example, a condition for determining the accessible target Wi-Fi access point may be selecting a trusted Wi-Fi access point with optimal network quality from the trusted Wi-Fi access points.

In another example, a trusted Wi-Fi access point with the network quality satisfying a preset value and a load status satisfying another preset value may be selected as the target Wi-Fi access point.

It should be understood that the above examples are merely provided for a better understanding of the technical schemes of this embodiment and are not intended to limit this embodiment.

In addition, it should be noted that a precondition for triggering the network side to deliver the Wi-Fi measurement control instruction to the terminal device through the mobile network is that when needing to initiate an MA PDU session request to the network side, the terminal device reports to the network side through the mobile network that the terminal device supports the ATSSS function. Therefore, after the terminal device accesses the determined target Wi-Fi access point, the MA PDU session request that needs to be initiated to a network side device is sent to the network side device through a Wi-Fi network corresponding to the accessed target Wi-Fi access point.

In addition, in an example, to allow the user using the terminal device to intuitively and clearly know that the terminal device is accessing a trusted and secure Wi-Fi access point, a preset trusted Wi-Fi identifier may be displayed on a user interface of the terminal device after the terminal device accesses the target Wi-Fi access point.

In an example, the trusted Wi-Fi identifier mentioned above may be delivered by the network side.

In addition, the trusted Wi-Fi identifier displayed on the user interface may be a preset text, or may be a preset icon, picture, etc., which will not be enumerated herein, and is not limited in this embodiment.

In addition, it should be noted that in practical applications, there may be a case where the user does not want to access any Wi-Fi network. Therefore, to avoid affecting the use experience of such users, an "Intelligent Access to Trusted Wi-Fi" option may be provided on the user interface of the terminal device, and this function is disabled by default. In other words, the Wi-Fi access scheme provided in this embodiment is executed only when the function is enabled by the user.

Based on the above, in the Wi-Fi access method provided in this embodiment, the network side delivers, through the mobile network, the Wi-Fi measurement control instruction carrying the description information of the trusted Wi-Fi access point determined by the network side to the terminal device accessing the mobile network, to ensure that the currently available Wi-Fi access point obtained by the terminal device in the state of accessing the mobile network is a trusted and secure Wi-Fi access point that has been authenticated by the network side. Therefore, even if the user operates the terminal device to access any Wi-Fi access point delivered by the network side, the accessed Wi-Fi access point is a trusted and secure Wi-Fi access point, thereby effectively preventing the terminal device from accessing an illegitimate network and ensuring the privacy of the user.

In addition, in the Wi-Fi access method provided in this embodiment, after receiving, from the network side, the Wi-Fi measurement control instruction carrying the description information of the trusted Wi-Fi access points, the terminal device performs, according to the description information of the trusted Wi-Fi access points, network quality detection on channels of the trusted Wi-Fi access points determined by the network side to obtain an indicator value for evaluating the network quality of the channel of each trusted Wi-Fi access point, finally determines the target Wi-Fi access point that the terminal device can finally access according to the trusted Wi-Fi access points and the indicator values corresponding to the trusted Wi-Fi access points, and accesses the determined target Wi-Fi access point. This not only ensures the network quality of the Wi-Fi access point finally accessed by the terminal device, but also ensures that the Wi-Fi access point accessed by the terminal device is trusted and secure, i.e., ensures both the network quality and the security.

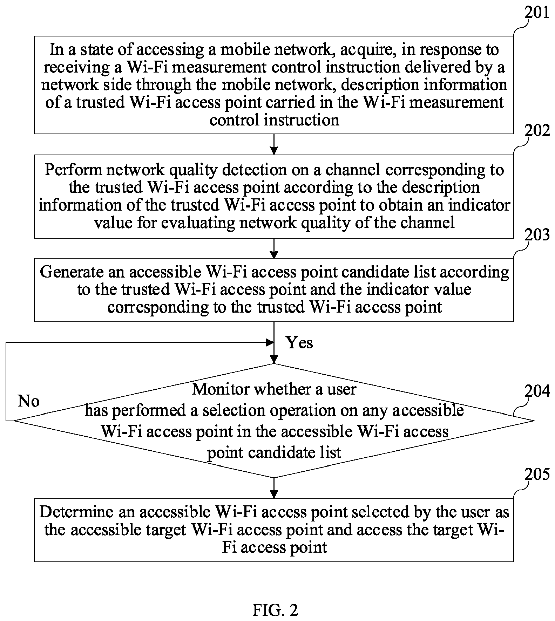

FIG. 2 is a flowchart of a Wi-Fi access method according to an embodiment of the present disclosure. In this embodiment, the method is still mainly applied to a terminal device having a capability of accessing a mobile network and a Wi-Fi network, such as a smart phone equipped with a SIM card.

As shown in FIG. 2, the Wi-Fi access method provided in this embodiment includes the following steps.

At a step 201, in a state of accessing a mobile network, when receiving a Wi-Fi measurement control instruction delivered by a network side through the mobile network, description information of a trusted Wi-Fi access point carried in the Wi-Fi measurement control instruction is acquired.

At a step 202, network quality detection is performed on a channel corresponding to the trusted Wi-Fi access point according to the description information of the trusted Wi-Fi access point to obtain an indicator value for evaluating network quality of the channel.

It can be seen that steps 201 and 202 in this embodiment are substantially the same as steps 101 and 102 in the embodiment shown in FIG. 1, so the details will not be repeated herein.

At a step 203, an accessible Wi-Fi access point candidate list is generated according to the trusted Wi-Fi access point and the indicator value corresponding to the trusted Wi-Fi access point.

In this embodiment, the operation of determining the target Wi-Fi access point is implemented locally in the terminal device. Therefore, after obtaining the indicator value corresponding to each respective trusted Wi-Fi access point, the terminal device determines the network quality corresponding to the respective trusted Wi-Fi access point according to the indicator value, determines the trusted Wi-Fi access point with the network quality satisfying a preset condition, e.g., with a signal strength higher than a preset threshold and/or a link quality higher than the preset threshold and/or a load status lower than a preset threshold, as an accessible Wi-Fi access point, and adds the determined accessible Wi-Fi access point to a unified list, thereby obtaining the accessible Wi-Fi access point candidate list to be finally displayed to the user.

In addition, in an example, the obtained accessible Wi-Fi access point candidate list may be presented to the user in the form of a pop-up box, i.e., a layer of layout is overlaid on the user interface currently operated by the user to display the accessible Wi-Fi access point candidate list.

In another example, the user interface currently operated by the user may jump to a new interface, and the accessible Wi-Fi access point candidate list is displayed in the new interface.

It should be understood that the above examples are merely provided for a better understanding of the technical schemes of this embodiment and are not intended to limit this embodiment.

At a step 204, it is monitored whether a user has performed a selection operation on any accessible Wi-Fi access point in the accessible Wi-Fi access point candidate list.

In an example, monitoring whether a user has performed a selection operation on any accessible Wi-Fi access point in the accessible Wi-Fi access point candidate list may be: monitoring whether a region in which each respective accessible Wi-Fi access point in the accessible Wi-Fi access point candidate list displayed in the user interface is located has been selected (e.g., touched or clicked) by the user or whether a selection box corresponding to each respective accessible Wi-Fi access point has been selected by the user; and if yes, it is determined that the selection operation performed by the user on the accessible Wi-Fi access point in the accessible Wi-Fi access point candidate list is detected.

In another example, a selection operation performed by the user on an accessible Wi-Fi access point in the accessible Wi-Fi access point candidate list may be monitored using a visual tracking technology, such that the target Wi-Fi access point to be accessed can be selected without manual operation by the user.

It should be understood that the above examples are merely provided for a better understanding of the technical schemes of this embodiment and are not intended to limit this embodiment.

Correspondingly, if the selection operation performed by the user on the accessible Wi-Fi access point in the accessible Wi-Fi access point candidate list is detected, a step 205 is executed; otherwise, the step 204 continues to be executed.

In addition, in practical applications, a monitoring time may be set. To be specific, if no selection operation performed by the user on any accessible Wi-Fi access point in the accessible Wi-Fi access point candidate list is detected within the monitoring time, step 204 continues to be executed; otherwise, the current Wi-Fi access process is terminated, and an MA PDU session request is directly initiated to the network side through the mobile network.

In addition, in another example, an operation button for exiting the list may further be provided in the accessible Wi-Fi access point candidate list. When the user does not select any accessible Wi-Fi access point in the accessible Wi-Fi access point candidate list, but triggers the operation button for exiting the list, the Wi-Fi access process is directly terminated, and an MA PDU session request is directly initiated to the network side through the mobile network.

It should be understood that the above examples are merely provided for a better understanding of the technical schemes of this embodiment and are not intended to limit this embodiment.

At a step 205, an accessible Wi-Fi access point selected by the user is determined as the accessible target Wi-Fi access point and the target Wi-Fi access point is accessed.

Therefore, according to the Wi-Fi access method provided in this embodiment, the terminal device locally determines, according to the indicator values corresponding to the trusted Wi-Fi access points, the accessible Wi-Fi access points that are trusted and secure and meet a network quality requirement, and displays the determined accessible Wi-Fi access points to the user in the form of a list, for the user to select one of the accessible Wi-Fi access points as the target Wi-Fi access point and access the determined target Wi-Fi access point. In this way, switching of the terminal device from a mobile network state to a Wi-Fi network state is implemented, such that the terminal device can initiate the MA PDU session request to the network side based on a Wi-Fi network. This not only ensures the communication speed between the terminal device and the network side, but also avoids excessive traffic usage of the terminal device to reduce user expenditure.

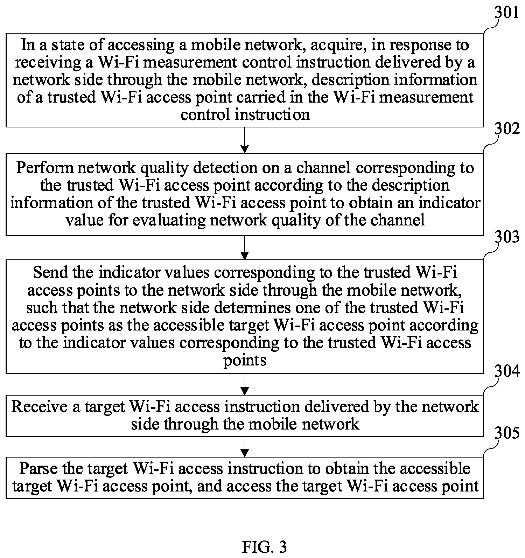

FIG. 3 is a flowchart of a Wi-Fi access method according to an embodiment of the present disclosure. In this embodiment, the method is still mainly applied to a terminal device having a capability of accessing a mobile network and a Wi-Fi network, such as a smart phone equipped with a SIM card.

As shown in FIG. 3, the Wi-Fi access method provided in this embodiment includes the following steps.

At a step 301, in a state of accessing a mobile network, when receiving a Wi-Fi measurement control instruction delivered by a network side through the mobile network, description information of a trusted Wi-Fi access point carried in the Wi-Fi measurement control instruction is acquired.

At a step 302, network quality detection is performed on a channel corresponding to the trusted Wi-Fi access point according to the description information of the trusted Wi-Fi access point to obtain an indicator value for evaluating network quality of the channel.

It can be seen that steps 301 and 302 in this embodiment are substantially the same as steps 101 and 102 in the embodiment shown in FIG. 1, so the details will not be repeated herein.

At a step 303, the indicator values corresponding to the trusted Wi-Fi access points are sent to the network side through the mobile network, such that the network side determines one of the trusted Wi-Fi access points as the accessible target Wi-Fi access point according to the indicator values corresponding to the trusted Wi-Fi access points.

At a step 304, a target Wi-Fi access instruction delivered by the network side through the mobile network is received.

At a step 305, the target Wi-Fi access instruction is parsed to obtain the accessible target Wi-Fi access point, and the target Wi-Fi access point is accessed.

In addition, it should be noted that, in practical applications, after the target Wi-Fi access instruction is parsed to obtain the accessible target Wi-Fi access point determined by the network side and before the operation of accessing the target Wi-Fi access point is executed, the determined target Wi-Fi access point may also be displayed to the user in a visual form, for the user to determine whether to access the target Wi-Fi access point at present. For example, it is monitored whether the user has performed a selection operation on the target Wi-Fi access point.

Correspondingly, if the selection operation performed on the target Wi-Fi access point is detected, the operation of accessing the target Wi-Fi access point is executed, the terminal device is switched from a mobile network state to the Wi-Fi network state, and then the Wi-Fi network corresponding to the target Wi-Fi access point sends an MA PDU session request to the network side. Otherwise, the terminal device remains in the mobile network state and sends the MA PDU session request to the network side through the mobile network.

It can be seen that in the Wi-Fi access method provided in this embodiment, the operation of determining the target Wi-Fi access point is implemented by the network side. Therefore, when obtaining the indicator value corresponding to each trusted Wi-Fi access point, the terminal device sends the obtained indicator values to the network side through the mobile network. The network side determines network quality corresponding to the trusted Wi-Fi access points according to the indicator values, selects a trusted Wi-Fi access point meeting a preset performance condition, e.g., having the highest performance, from the trusted Wi-Fi access points as the accessible target Wi-Fi access point according to reference factors such as a current real network environment and a load status, and then delivers the target Wi-Fi access instruction carrying the description information of the target Wi-Fi access point to the terminal device through the mobile network, such that the terminal device accesses the target Wi-Fi access point determined by the network side according to the target Wi-Fi access instruction. Because the terminal device does not need to perform the processing operation of determining the network quality of the channels of the trusted Wi-Fi access points, requirements on the performance of the terminal device are lowered. Therefore, the Wi-Fi access method provided in this embodiment can be applied to more terminal devices, to improve competitiveness of terminal devices.

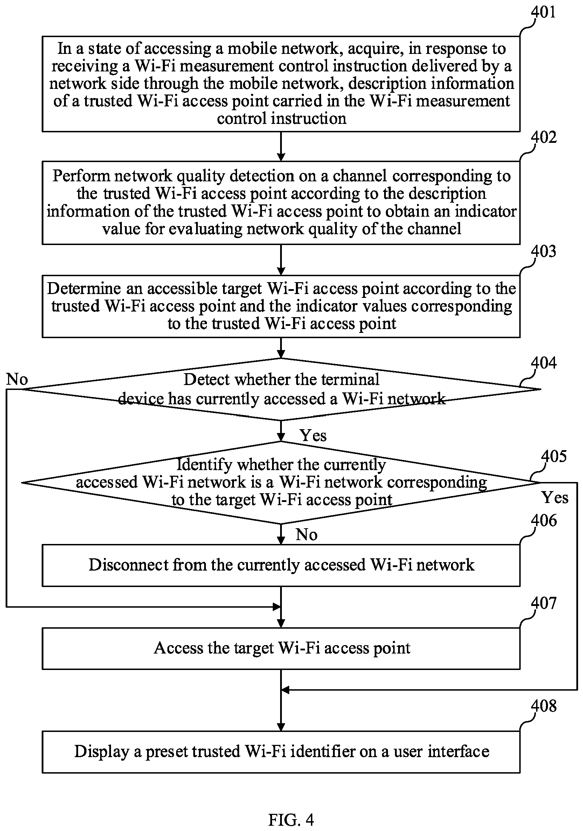

FIG. 4 is a flowchart of a Wi-Fi access method according to an embodiment of the present disclosure. In this embodiment, the method is still mainly applied to a terminal device having a capability of accessing a mobile network and a Wi-Fi network, such as a smart phone equipped with a SIM card.

As shown in FIG. 4, the Wi-Fi access method provided in this embodiment includes the following steps.

At a step 401, in a state of accessing a mobile network, when receiving a Wi-Fi measurement control instruction delivered by a network side through the mobile network, description information of a trusted Wi-Fi access point carried in the Wi-Fi measurement control instruction is acquired.

At a step 402, network quality detection is performed on a channel corresponding to the trusted Wi-Fi access point according to the description information of the trusted Wi-Fi access point to obtain an indicator value for evaluating network quality of the channel.

It can be seen that steps 401 and 402 in this embodiment are substantially the same as steps 101 and 102 in the embodiment shown in FIG. 1, so the details will not be repeated herein.

At a step 403, an accessible target Wi-Fi access point is determined according to the trusted Wi-Fi access point and the indicator value corresponding to the trusted Wi-Fi access point.

Determining the accessible target Wi-Fi access point according to the trusted Wi-Fi access point and the indicator value corresponding to the trusted Wi-Fi access point may be implemented locally by the terminal device as described in the embodiment shown in FIG. 2 or implemented by the network side as described in the embodiment shown in FIG. 3, which is not limited in this embodiment. For the specific determination manner, reference may be made to the embodiment shown in FIG. 2 and the embodiment shown in FIG. 3, and the details will not be repeated herein.

At a step 404, it is detected whether the terminal device has currently accessed a Wi-Fi network.

It should be noted that in practical applications, before the terminal device receives the target Wi-Fi access instruction delivered by the network side, the user may have manually operated the terminal device to access a Wi-Fi network. Therefore, to avoid frequent switching of the Wi-Fi network of the terminal device, before the target Wi-Fi access point is accessed, it is necessary to detect whether the terminal device has currently accessed a Wi-Fi network.

Correspondingly, if the terminal device has currently accessed a Wi-Fi network, a step 405 is executed; otherwise, a step 407 is executed to execute the operation of accessing the target Wi-Fi access point.

At the step 405, it is identified whether the currently accessed Wi-Fi network is a Wi-Fi network corresponding to the target Wi-Fi access point.

To ensure that the Wi-Fi network accessed by the terminal device is trusted and secure, when it is determined that the terminal device has currently accessed a Wi-Fi network, it may be identified whether the currently accessed Wi-Fi network is the Wi-Fi network corresponding to the target Wi-Fi access point.

Correspondingly, if yes, a step 408 is executed; otherwise, a step 406 is executed.

In addition, it should be noted that, in practical applications, if the currently accessed Wi-Fi network is not the Wi-Fi network corresponding to the target Wi-Fi access point, it may be determined whether the currently accessed Wi-Fi network belongs to the accessible Wi-Fi access point candidate list locally determined by the terminal device or is a Wi-Fi network corresponding to a trusted Wi-Fi access point delivered by the network side.

If yes, the step 406 may not be executed, but instead, the step 408 is executed to inform the user that the currently accessed Wi-Fi network is trusted and secure.

At the step 406, the currently accessed Wi-Fi network is disconnected.

It should be noted that, in practical applications, before disconnecting from the currently accessed Wi-Fi network, the target Wi-Fi access point may be configured as a primary Wi-Fi access point, a Wi-Fi access point corresponding to the currently accessed Wi-Fi network may be configured as a secondary Wi-Fi access point, and an access priority of the primary Wi-Fi access point is set to be higher than an access priority of the secondary Wi-Fi access point. In this way, after the terminal device accesses the primary Wi-Fi access point, if a network of the primary Wi-Fi access point becomes faulty, the terminal device and the network side may automatically switch the terminal device from the primary Wi-Fi access point to the secondary Wi-Fi access point based on the ATSSS function, so as to ensure that the terminal device can continue to use a Wi-Fi network.

It can be understood that for this manner, before the Wi-Fi access point corresponding to the currently accessed Wi-Fi network is configured as the secondary Wi-Fi access point, it is necessary to determine that the Wi-Fi access point is trusted and secure, so as to ensure the service implementation and the security.

At the step 407, the target Wi-Fi access point is accessed.

At the step 408, a preset trusted Wi-Fi identifier is displayed on a user interface.

Therefore, in the Wi-Fi access method provided in this embodiment, before accessing the determined target Wi-Fi access point, the terminal device detects whether the terminal device has accessed a Wi-Fi network, and then determines according to a result of the detection whether to execute the operation of accessing the target Wi-Fi access point, or to disconnect from the Wi-Fi access point corresponding to the currently accessed Wi-Fi network and access the target Wi-Fi access point, or to keep the currently accessed Wi-Fi network unchanged and directly set a trusted identifier for the Wi-Fi network. This avoids the frequent switching of the Wi-Fi network accessed by the terminal device as much as possible, and effectively ensures that the Wi-Fi access point accessed by the terminal device is trusted and secure. Therefore, the Wi-Fi access method provided in this embodiment can better adapt to actual usage scenarios.

In addition, it should be understood that the division of the steps of the above methods is only for the sake of clear description, and in practical applications, the steps may be combined into one step, or some steps may be divided into multiple steps. Such combination or division falls within the scope of protection of the present disclosure as long as the same logical relationship is included. Any insignificant modification made to or any insignificant design introduced in an algorithm or process without changing the core design of the algorithm and process shall fall within the scope of protection of the present disclosure.

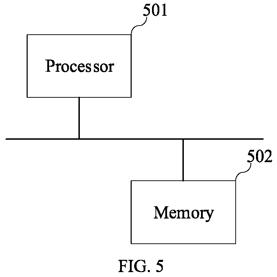

FIG. 5 is a schematic structural diagram of a terminal device according to an embodiment of the present disclosure.

As shown in FIG. 5, the terminal device provided in this embodiment includes: at least one processor 501; and a memory 502 communicably connected to the at least one processor 501.

The memory 502 stores an instruction executable by the at least one processor 501 which, when executed by the at least one processor 501, causes the at least one processor 501 to implement the Wi-Fi access method according to the foregoing method embodiments.

The memory 502 and the processor 501 are connected by a bus. The bus may include any number of interconnected buses and bridges. The bus connects various circuits of one or more processors 501 and the memory 502 together. The bus may also connect together a peripheral device, a voltage regulator, a power management circuit, and other circuits, which are well known in the art and therefore will not be detailed herein. A bus interface provides an interface between the bus and a transceiver. The transceiver may be one element or a plurality of elements, for example, a plurality of receivers and transmitters, and provides a unit configured to communicate with various other apparatus over a transmission medium. Data processed by the processor 501 is transmitted over a wireless medium through an antenna. The antenna further receives data and transmits the data to the processor 501.

The processor 501 is responsible for managing the bus and general processing and may also provide various functions including timing, peripheral interfaces, voltage regulation, power management and other control functions. The memory 502 may be configured to store data used by the processor 501 in performing operations.

An embodiment of the present disclosure relates to a computer-readable storage medium, storing a computer program which, when executed by a processor, causes the processor to implement the Wi-Fi access method according to the foregoing method embodiments.

According to the Wi-Fi access method, the terminal device, and the storage medium provided in the embodiments of the present disclosure, the network side delivers, through the mobile network, the Wi-Fi measurement control instruction carrying the description information of the trusted Wi-Fi access point determined by the network side to the terminal device accessing the mobile network, to ensure that the currently available Wi-Fi access point obtained by the terminal device in the state of accessing the mobile network is a trusted and secure Wi-Fi access point that has been authenticated by the network side. Therefore, even if the user operates the terminal device to access any Wi-Fi access point delivered by the network side, the accessed Wi-Fi access point is a trusted and secure Wi-Fi access point, thereby effectively preventing the terminal device from accessing an illegitimate network and ensuring the privacy of the user.

In addition, in the Wi-Fi access scheme provided in this embodiment, after receiving, from the network side, the Wi-Fi measurement control instruction carrying the description information of the trusted Wi-Fi access points, the terminal device performs, according to the description information of the trusted Wi-Fi access points, network quality detection on channels of the trusted Wi-Fi access points determined by the network side to obtain an indicator value for evaluating the network quality of the channel of each trusted Wi-Fi access point, finally determines the target Wi-Fi access point that the terminal device can finally access according to the trusted Wi-Fi access points and the indicator values corresponding to the trusted Wi-Fi access points, and accesses the determined target Wi-Fi access point. This not only ensures the network quality of the Wi-Fi access point finally accessed by the terminal device, but also ensures that the Wi-Fi access point accessed by the terminal device is trusted and secure, i.e., ensures both the network quality and the security.

It may be understood by those having ordinary skills in the art that all or some of the steps of the methods in the above embodiments may be performed by a program instructing related hardware. The program is stored in a storage medium, and includes several instructions to cause a device (which may be a single chip microcomputer, a chip, etc.) or a processor to perform all or some of the steps of the methods described in the embodiments of the present disclosure. The foregoing storage medium includes: any medium that can store program code, such as a USB flash drive, a removable hard disk, a Read-Only Memory (ROM), a Random Access Memory (RAM), a magnetic disk, or an optical disk.

It may be understood by those having ordinary skills in the art that the foregoing embodiments are specific embodiments for practicing the present disclosure and that in practical applications, various changes in form and details may be made without departing from the scope of the present disclosure.

## Claims

1. A Wireless Fidelity (Wi-Fi) access method, applied to a terminal device, the Wi-Fi access method comprising:
in a state of accessing a mobile network, acquiring, in response to receiving a Wi-Fi measurement control instruction delivered by a network side through the mobile network, description information of a trusted Wi-Fi access point carried in the Wi-Fi measurement control instruction;
performing network quality detection on a channel corresponding to the trusted Wi-Fi access point according to the description information of the trusted Wi-Fi access point to obtain an indicator value for evaluating network quality of the channel; and
determining an accessible target Wi-Fi access point according to the trusted Wi-Fi access point and the indicator value corresponding to the trusted Wi-Fi access point, and accessing the target Wi-Fi access point.

2. The Wi-Fi access method of claim 1, wherein determining an accessible target Wi-Fi access point according to the trusted Wi-Fi access point and the indicator value corresponding to the trusted Wi-Fi access point comprises:
generating an accessible Wi-Fi access point candidate list according to the trusted Wi-Fi access point and the indicator value corresponding to the trusted Wi-Fi access point;
monitoring whether a user has performed a selection operation on any accessible Wi-Fi access point in the accessible Wi-Fi access point candidate list; and
determining an accessible Wi-Fi access point selected by the user as the accessible target Wi-Fi access point and accessing the target Wi-Fi access point, in response to detecting the selection operation performed by the user on the accessible Wi-Fi access point in the accessible Wi-Fi access point candidate list.

3. The Wi-Fi access method of claim 1, wherein determining an accessible target Wi-Fi access point according to the trusted Wi-Fi access point and the indicator value corresponding to the trusted Wi-Fi access point comprises:
sending the indicator values corresponding to the trusted Wi-Fi access points to the network side through the mobile network, such that the network side determines one of the trusted Wi-Fi access points as the accessible target Wi-Fi access point according to the indicator values corresponding to the trusted Wi-Fi access points;
receiving a target Wi-Fi access instruction delivered by the network side through the mobile network; and
parsing the target Wi-Fi access instruction to obtain the accessible target Wi-Fi access point, and accessing the target Wi-Fi access point.

4. The Wi-Fi access method of claim 3, wherein after parsing the target Wi-Fi access instruction to obtain the accessible target Wi-Fi access point, and before accessing the target Wi-Fi access point, the method further comprises:
monitoring whether a user has performed a selection operation on the target Wi-Fi access point; and
executing the operation of accessing the target Wi-Fi access point, in response to detecting the selection operation performed by the user on the target Wi-Fi access point.

5. The Wi-Fi access method of claim 1, wherein before accessing the target Wi-Fi access point, the method further comprises:
detecting whether the terminal device has currently accessed a Wi-Fi network;
executing the operation of accessing the target Wi-Fi access point, in response to a detection that the terminal device has not currently accessed a Wi-Fi network; and
identifying whether the currently accessed Wi-Fi network is a Wi-Fi network corresponding to the target Wi-Fi access point, in response to a detection that the terminal device has currently accessed a Wi-Fi network; and
disconnecting from the currently accessed Wi-Fi network and executing the operation of accessing the target Wi-Fi access point, in response to a detection that the currently accessed Wi-Fi network is not the Wi-Fi network corresponding to the target Wi-Fi access point.

6. The Wi-Fi access method of claim 5, wherein before disconnecting from the currently accessed Wi-Fi network and executing the operation of accessing the target Wi-Fi access point, the method further comprises:
configuring the target Wi-Fi access point as a primary Wi-Fi access point, and configuring a Wi-Fi access point corresponding to the currently accessed Wi-Fi network as a secondary Wi-Fi access point, wherein an access priority of the primary Wi-Fi access point is higher than an access priority of the secondary Wi-Fi access point.

7. The Wi-Fi access method of any one of claims 1 to 6, wherein after accessing the target Wi-Fi access point, the method further comprises:
displaying a preset trusted Wi-Fi identifier on a user interface.

8. The Wi-Fi access method of claim 7, wherein before acquiring, in response to receiving a Wi-Fi measurement control instruction delivered by a network side through the mobile network, description information of a trusted Wi-Fi access point carried in the Wi-Fi measurement control instruction, the method further comprises:
in the state of accessing the mobile network, detecting whether the terminal device supports an Access Traffic Steering, Switching, and Splitting (ATSSS) function and a Wi-Fi function, in response to a requirement for initiating a Multi-Access (MA) Protocol Data Unit (PDU) session request to the network side; and
reporting, in response to the terminal device supporting the ATSSS function and the Wi-Fi function, the support of the ATSSS function and the Wi-Fi function by the terminal device to the network side through the mobile network and triggering the network side to deliver the Wi-Fi measurement control instruction through the mobile network.

9. The Wi-Fi access method of claim 8, wherein detecting whether the terminal device supports the ATSSS function comprises:
acquiring an MA PDU session request initiated to the network side;
parsing the MA PDU session request to extract an atsss_st field in the MA PDU session request; and
determining that the terminal device supports the ATSSS function, in response to a field value which corresponds to the atsss_st field matching a preset threshold.

10. The Wi-Fi access method of claim 7, wherein after determining an accessible target Wi-Fi access point according to the trusted Wi-Fi access point and the indicator value corresponding to the trusted Wi-Fi access point, and accessing the target Wi-Fi access point, the method further comprises:
sending the PDU session request to the network side through the Wi-Fi network corresponding to the target Wi-Fi access point.

11. The Wi-Fi access method of claim 7, wherein before acquiring, in response to receiving a Wi-Fi measurement control instruction delivered by a network side through the mobile network, description information of a trusted Wi-Fi access point carried in the Wi-Fi measurement control instruction, the method further comprises:
determining that the network side supports the ATSSS function.

12. The Wi-Fi access method of claim 11, wherein determining that the network side supports the ATSSS function comprises:
acquiring a registration accept message delivered by the network side through the mobile network;
parsing the registration accept message to extract an ats_ind field in the registration accept message; and
determining that the network side supports the ATSSS function, in response to a field value which corresponds to the ats_ind field matching a preset threshold.

13. A terminal device, comprising:
at least one processor; and
a memory communicably connected to the at least one processor, wherein:
the memory stores an instruction executable by the at least one processor which, when executed by the at least one processor, causes the at least one processor to perform the Wi-Fi access method of any one of claims 1 to 12.

14. A computer-readable storage medium, storing a computer program which, when executed by a processor, causes the processor to perform the Wi-Fi access method of any one of claims 1 to 12.
